# EUROPEAN PATENT APPLICATION

(11) **EP 4 410 412 A1**
(43) Date of publication of application: **07.08.2024**
(21) Application number: 21959201.1
(22) Date of filing: 30.09.2021
(51) Int. Cl.: B01F 23/20

(54) **A MOBILE SYSTEM FOR THE IN-SITU GENERATION OF OXYGEN AND COMPRESSED AIR WITH NO BUILD-UP THEREOF, WHICH INCREASES THE CONCENTRATION OF DISSOLVED OXYGEN IN THE CAGES AS REQUIRED**

(71) Applicant: Oxzo S.A., Puerto Montt, 5501619 (CL)
(72) Inventor: MARCUS DEL CAMPO, John Robert, Puerto Montt, 5501619 (CL); HUSAK SOTOMAYOR, Thomas Wenzel, Puerto Montt, 5501619 (CL)
(74) Representative: Clarke, Modet y Cía., S.L.
(86) International application number: PCT/IB2021/059021
(87) International publication number: WO 2023/052825

(57) **Abstract**

The present invention relates to a mobile system (100) for the in-situ generation of oxygen and compressed air with no build-up thereof, which increases the concentration of dissolved oxygen in the cages as required, being modular and mobile, weighing at least 10 tonnes, not producing its own electricity, and automated, comprising: a container (101) comprising inside of same: at least one oxygen generation means (102) with at least one oxygen tank (104); at least one air compression means (103) with at least one air tank (105); pipes for transporting air and/or oxygen from the mobile system (100) to at least one cage or container for aquaculture; control means (106) connected to air sensors and oxygen sensors located within the cages or containers for aquaculture, to collect the air and oxygen data respectively and to send those data in order to command the generation and delivery of oxygen to said cages or containers for aquaculture, in accordance with the biological species to be farmed; and electrical connection means (110) that are connected to the electricity grid and supply electricity to the oxygen generation means (102); the air compression means (103); the air sensors and oxygen sensors, and to the control means (106).

## Description

### FIELD OF THE INVENTION

The present invention relates to the aquaculture industry. In particular, the present invention relates to a system of in-situ oxygen generation and mobile air that increases dissolved oxygen concentrations in the cages, improving environmental conditions and optimizing culture productivity by consisting of a modular, automated, on-demand oxygen generation system, linked to a monitoring system with dissolved oxygen sensors installed in the fish cages, in a mobile manner, of less than 10 tons, without producing electrical energy of its own, and adjusted to the needs of the culture cage or cages either on land or in the sea or lake or river, as long as said cages are close to the shore or shore of the sea or lake.

In particular, the present technology relates to a transportable in-situ oxygen and air generation system that increases the dissolved oxygen concentrations in the cages, improving the environmental conditions and optimizing the productivity of the culture, by consisting of an automated modular system of oxygen generation on demand, linked to a monitoring system with dissolved oxygen sensors installed in the fish cages, which is managed through an algorithm that controls the dosage of oxygen with respect to a target data (Set Point), comprising: means of oxygen generation (separation of oxygen and nitrogen), means of air compression and drying, by means of a molecular sieve and distribution of this by means of an electrovalve box, each unit commanded by a control computer with integrated software and means of connection to the culture centers. No accumulation of oxygen within the system, being this only generated when it is required. This avoids oxygen losses due to evaporation, typical of cryogenic systems, as well as the risks associated with the storage of gases at high pressures.

In addition, the oxygen generated is distributed according to the specific requirement of each cage, based on the instantaneous oxygen concentration measured by the sensors in the water. In this way, oxygen is injected only where it is needed, optimizing oxygen use during system operation. This system is modular, mobile, easily replaceable and easy to maintain.

### PRIOR ART

Currently, the aquaculture industry has the disadvantage of not having an oxygen generation system in-situ and mobile air that increases dissolved oxygen concentrations in the cages on demand, in a modular, mobile way of less than 10 tons, without producing electrical energy in its own way, automated, linked to a monitoring system with dissolved oxygen sensors installed in the fish cages either on the seashore, river or lake or in land-based facilities.

Several solutions have been found in the state of the art, which partially solve the technical problem posed. Among what is known is Chilean patent 48. 712, which discloses a portable system for the generation of oxygen in situ and injection of oxygen at industrial levels for fish cages at sea, making it possible to transfer oxygen in industrial quantities to fish farming sites located in remote places, comprising: a) a floating platform, pontoon type, with a buoyancy of at least 50 tons and is capable of being towed in the open sea, where inside said pontoon it has: (b) a system which generates oxygen at 93 - 95% purity; and (c) an electricity generating and distribution system, which provides electrical power to the components of said oxygen generating system, wherein said oxygen generating system comprises pressurised air generating means, pressurised oxygen generating means, high pressure oxygen compression and accumulation means and oxygen generating system control means.

Currently, there is no prior art system for oxygen generation on demand, without accumulation of oxygen within the system, allowing its use only when required, avoiding oxygen losses by evaporation, typical of cryogenic systems, as well as the risks associated with the storage of gases at high pressures, where the oxygen generation system in-situ and mobile air increase the concentrations of dissolved oxygen in the cages on demand, in a modular, mobile way of at least 10 tons and at most 40 tons, without producing electrical energy of its own, automated, linked to a monitoring system with dissolved oxygen sensors installed in the fish cages, and adjusted to the needs of the culture cage or cages, improving in turn the environmental conditions and optimizing the productivity of the culture.

There is also patent application CN208898503U disclosing a type of oxygenation equipment for transporting aquatic products, comprising a fish transport container, a microporous nanometer oxygen augmentation device, an oxygen passage, an aerator, and oxygen content adjusting means wherein, the aerator is fitted with oxygen content adjustment means that are fixed to the transport box, and the oxygen content is adjusted as necessary and in accordance with the oxygen content monitoring device, the controller and an alarm, which are sequentially connected with the aerator.

### SOLUTION TO THE TECHNICAL PROBLEM

To overcome the problem, a system for the generation of oxygen in-situ and mobile air that increases the dissolved oxygen concentrations in the cages on demand, in a modular, mobile way of less than 10 tons, without producing electrical energy of its own, automated, is presented, linked to a monitoring system with dissolved oxygen sensors, which is constantly adjusted according to a target value of dissolved oxygen quantity, wherein the monitoring system is installed in the fish cages, and said fish cages are located on the seashore, river or lake shore or in land-based facilities.

### DESCRIPTION OF THE FIGURES

Figure 1 shows a side view of the mobile system (100) for oxygen and air generation.
Figure 2 shows an isometric view of the mobile system (100) for oxygen and air generation, and

### DESCRIPTION OF THE INVENTION

In particular, it is related to an in-situ oxygen generation equipment, which integrates the unitary processes of atmospheric air compression, air drying, separation of this into oxygen and nitrogen by means of a molecular sieve and distribution of this by means of a panel of electrovalves, each unit being commanded by a control computer with integrated software. The system is powered by electrical energy from a grid or generator, which can be activated remotely and automatically by the control software.

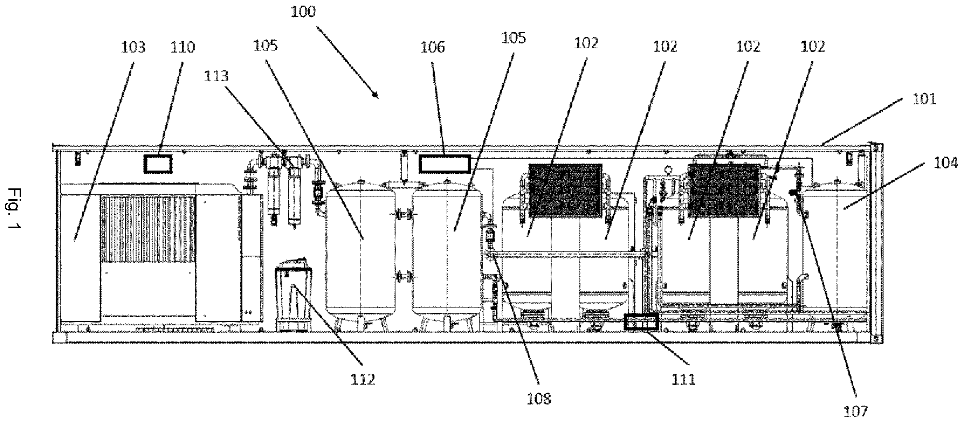

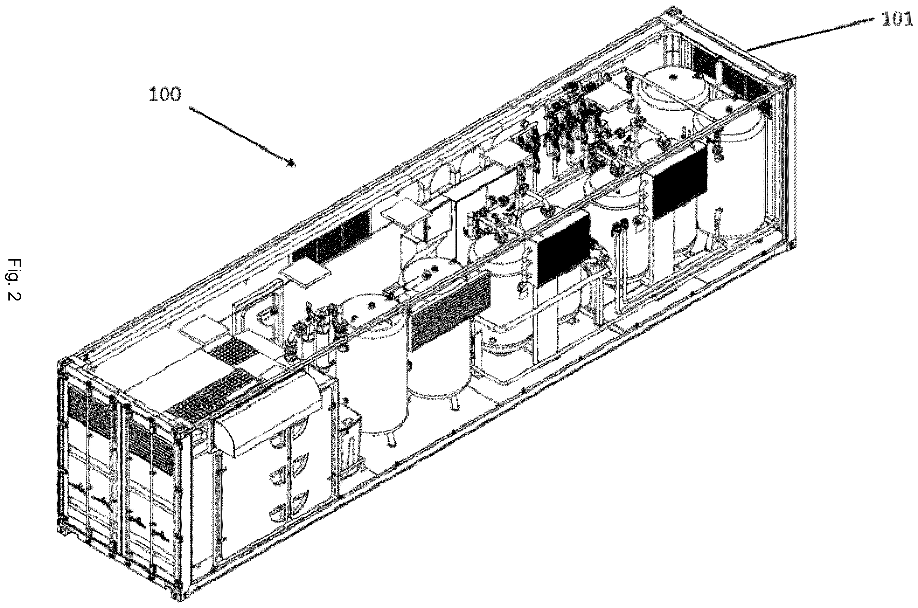

As depicted in Figures 1 and 2, the present invention provides a mobile system (100) for generating oxygen and compressed air in-situ without accumulation, that increases dissolved oxygen concentrations in cages on demand, in a modular, mobile manner of at least 10 tons and at most 40 tons, without producing electrical energy of its own, automated manner comprising, in an essential manner:
a container (101), comprising inside:
at least one oxygen generating means (102), with at least one oxygen pond (104);
at least one means for compressing air (103), with at least one air container (105);
ducts for transporting air and/or oxygen from the mobile system (100) to at least one aquaculture cage or container;
control means (106), which are connected to air sensors and oxygen sensors located in the cages or containers for aquaculture, to take the respective air and oxygen data and send this data to those who command the generation and delivery of oxygen to said cages or containers for aquaculture, according to the biological species to be cultivated; and
electrical connection means (110) which are connected to the mains supplying electricity to the oxygen generation means (102); the air compression means (103); the air sensors and oxygen sensors; and the control means (106).

In a preferred embodiment, without limiting the scope of the present invention, the mobile system (100) may comprise oxygen control valves (107) and air control valves (108), which are commanded by the control means (106), to dose the delivery of oxygen of at least 90% purity. The number of oxygen control valves (107) and air control valves (108) does not limit the scope of the present invention and may depend, for example and without limiting the scope of the present invention, on the dimensions and capacity of the mobile system (100) which is the subject of the present invention.

The pressure in the ducts for transporting oxygen of the mobile system (100) which is the subject of the present invention may be greater than a certain threshold value without this limiting the scope of the present invention. For example, and without limiting the scope of the present invention, the pressure in the ducts for conveying oxygen may be at least 50 kPa (0.5 Bar), more preferably at least 100 kPa (1 Bar) and even more preferably at least 150 kPa (1.5 Bar).

Similarly, without limiting the scope of the present invention, the pressure in the ducts for conveying air of the mobile system (100) which is the subject of the present invention may be greater than a certain threshold value without limiting the scope of the present invention. For example, and without limiting the scope of the present invention, the pressure in the ducts for conveying air of the mobile system (100) which is the subject of the present invention may be at least 150 kPa (1.5 Bar), more preferably at least 200 kPa (2 Bar) and even more preferably at least 250 kPa (2.5 Bar).

In any of the previously described preferred embodiments, without limiting the scope of the present invention, the diffusion of the gases, namely air and/or oxygen, can be performed either with a single diffuser for the two gases or by means of a diffuser for each gas. In an example embodiment, without limiting the scope of the present invention, diffusion of the gases may be performed in a diffuser for each gas. In a second example embodiment, without limiting the scope of the present invention, the diffusion of the gases can be performed by a single diffuser which is fed by an air duct and by an oxygen duct. In any of said preferred embodiments, namely where diffusion is performed with a diffuser for each gas or with a single diffuser, the mobile system (100) which is the subject of the present invention may comprise such a diffuser. However, in other preferred embodiments, without limiting the scope of the present invention, the ducts for conveying air and/or oxygen forming part of the mobile system (100) which is the subject of the present invention may comprise means of coupling to a diffuser.

In a preferred embodiment, without limiting the scope of the present invention, the mobile system (100) that is the subject of the present invention may comprise a water pump (111) for inserting water into cages or containers for aquaculture enriched with air, oxygen or mixture of both gases. The capacity of such a pump does not limit the scope of the present invention and may depend, for example, on the dimensions and capacity of the mobile system (100) which is the subject of the present invention.

In another preferred embodiment, without limiting the scope of the present invention, the mobile system (100) which is the subject of the present invention may further comprise at least one drain (112) for extracting water from an air dryer (113) connected to said at least one oxygen generating means (102).

In another preferred embodiment, the mobile system (100) that is the subject of the present invention may comprise an additional source of energy without limiting the scope of the present invention. For example, and without limiting the scope of the present invention, the mobile system (100) may comprise solar panels with batteries and/or voltage inverters. Said additional source of power, for example and without limiting the scope of the present invention, may be provided to supplement the delivery of electrical power to sensors, control means (106), or other electrical or electronic equipment forming part of the mobile system (100) that is the subject of the present invention.

The relationship between the amount of air generated and the amount of oxygen generated by the mobile system (100) which is the subject of the present invention does not limit the scope of the present invention. For example, and without limiting the scope of the present invention, the ratio between the amount of air generated and the amount of oxygen generated may be between 15 to 1 and 4 to 1 in volume, in order to decrease energy consumption with respect to oxygenation of the aqueous medium.

Similarly, without limiting the scope of the present invention, the ratio between the total volume of the mobile system (100) and the generated oxygen flow is not a limiting factor. For example and without limiting the scope of the present invention, the ratio between the total volume of the system and the oxygen flow rate generated may be between 0,3 and 1 m³ h/kg.

In another preferred configuration the mobile system (100) for oxygen generation in-situ further comprises rolling means, not shown in the figures, are at the bottom of the container (101), to facilitate ground displacement of the mobile system (100) and/or at least one floating means, not shown in the figures, are at the bottom of the container (101), to facilitate displacement of the mobile system (100) on a liquid fluid, such as for example sea displacement. Moreover, the at least two containers (101) are on the at least one floating medium, wherein the floating medium is common for the containers (101). This mobile system (100) of in-situ oxygen generation without accumulation, is preferably transported by truck, or floating means and in addition the at least one oxygen tank (104); it has a lung function, to buffer excess demand from aquaculture cages.

In addition, the oxygen generated is distributed according to the specific requirement of each cage, based on the instantaneous oxygen concentration measured by the sensors in the water. In this way, oxygen is injected only where it is needed, optimizing oxygen use during system operation.

The system also has remote control, solving the problem of operability when access to it is limited and facilitates the control and monitoring of oxygen for both the direct user in the cultivation center and for external users.

According to the previously detailed description, it is possible to obtain a mobile system (100) for oxygen generation in-situ without accumulation, which increases the dissolved oxygen concentrations in the cages on demand, in a modular, mobile manner of less than at least 10 tons, preferably of at least 17 tons and at most 40 tons, without producing electrical energy in its own, automated manner.

It should be understood that the different options for the technical features of the mobile system (100) which is the subject of the present invention may be combined with each other in any manner envisaged by a person ordinarily skilled in the art, or with others known in the prior art, without this limiting the scope of the present invention.

### APPLICATION EXAMPLES

Examples of application of the present invention will be given below. Said examples are provided only by way of illustration to provide a better understanding of the invention, but in no case should they be considered as limiting the scope of the protection applied for. Additionally, specifications of different technical features described in the examples can be combined with each other, or with other technical features previously described, without limiting the scope of protection requested.

### EXAMPLE 1: MOBILE SYSTEM APPLICATION

In an aquaculture facility, the present mobile oxygen generation system (100) was used in-situ without accumulation, where the container (101), was transported in a truck to reach the area of interest, which had 4 aquaculture cages and said container (101) measured 12,2 m in length, 2,89 m in height, and 2.43 m in width with a total weight of 17,1 tons.

The mobile system (100) had two oxygen generation units (102), with two oxygen tanks (104); which in one line produced 19,7 m³/h (33.6 SCFM), with a flow rate of 0,96 Sm³/min and a mass flow rate of 75 kg/h, while the other line produced 39,6 m³/h (67,4 SCFM), with a flow rate of 1,91 Sm³/min and a mass flow rate of 150 kg/h, and a means for compressing air (103), which produced line produced 441 m³/h (749 SCFM), with a flow rate of 21.22 Sm³/min and a mass flow rate of 1502 kg/h,

The minimum oxygen pressure was 200 kPa (2 Bar) and the minimum air pressure was 450 kPa (4,5 Bar).

As a result, higher oxygen levels were observed in the cages only 5 minutes after the start of diffusion, raising the saturation of the cages up to 110% oxygen, thus increasing the delivery of food to the salmon, thanks to the oxygen injection.

Constant remote oxygen monitoring and control ensured optimal use of the system and improved salmon growth.

## Claims

1. A mobile system (100) for generating oxygen and compressed air in-situ without accumulation, that increases dissolved oxygen concentrations in cages on demand, in a modular, mobile manner of at least 10 tons, without producing electrical power of its own, automated, **CHARACTERIZED in that** it comprises:
a container (101), comprising inside:
at least one oxygen generating means (102), with at least one oxygen pond (104);
at least one means for compressing air (103), with at least one air container (105);
ducts for transporting air and/or oxygen from the mobile system (100) to at least one aquaculture cage or container;
control means (106), which are connected to air sensors and oxygen sensors located in the cages or containers for aquaculture, to take the respective air and oxygen data and send this data to those who command the generation and delivery of oxygen to said cages or containers for aquaculture, according to the biological species to be cultivated; and
electrical connection means (110) which are connected to the mains supplying electricity to the oxygen generation means (102); the air compression means (103); the air sensors and oxygen sensors; and the control means (106).

2. The mobile oxygen and compressed air generation system (100) in-situ according to claim 1, **CHARACTERIZED in that** it comprises oxygen control valves (107) and air control valves (108), which are commanded by control means (106), for metering the delivery of oxygen of at least 90% purity.

3. The mobile system (100) for generating oxygen and compressed air in-situ according to claim 1, **CHARACTERIZED in that** the pressure in the ducts for conveying oxygen is at least 150 kPa (1.5 Bar).

4. The mobile system (100) for generating oxygen and compressed air in-situ according to claim 1, **CHARACTERIZED in that** the pressure in the ducts for conveying air is at least 250 kPa (2,5 Bar).

5. The mobile system (100) for generating oxygen and compressed air in-situ according to claim 1, 2, 3 or 4, **CHARACTERIZED in that** the diffusion of air and/or oxygen is performed in a diffuser for each gas or a single diffuser for the two gases which is fed by an air duct and an oxygen duct.

6. The mobile system (100) for generating oxygen and compressed air in-situ according to claim 1, 2, 3 or 4, **CHARACTERIZED in that** it further comprises a water pump (111) for inserting water into cages or containers for aquaculture enriched with air, oxygen or mixture of both gases.

7. The mobile oxygen and compressed air generation system (100) in-situ according to claim 1, **CHARACTERIZED in that** it further comprises at least one drain (112) for removing water from an air dryer (113) connected to said at least one oxygen generation means (102).

8. The mobile oxygen and compressed air generation system (100) in-situ according to claim 1, **CHARACTERIZED in that** it further comprises solar panels with batteries and/or voltage inverters to supplement the delivery of electrical power to sensors, control means (106), among other electrical or electronic equipment.

9. The mobile oxygen generation system (100) in-situ according to claim 1, **CHARACTERIZED in that** the ratio between the amount of air generated and the amount of oxygen generated is between 15 to 1 and 4 to 1 by volume, to decrease energy consumption with respect to oxygenation of the aqueous medium.

10. The mobile system (100) for generating oxygen and compressed air in-situ according to claim 1, **CHARACTERIZED in that** the ratio between the total system volume and the generated oxygen flow rate is between 0,2 and 1 m³ h/kg.

11. The mobile system (100) for generating oxygen and compressed air in-situ according to claim 1, **CHARACTERIZED in that** it further comprises rolling means at the bottom of the container (101), to facilitate moving the mobile system (100).

12. The mobile system (100) for generating oxygen and compressed air in-situ according to claim 1, **CHARACTERIZED in that** it further comprises at least one floating means at the bottom of the container (101), to facilitate displacement of the mobile system (100) on a liquid fluid.

13. The mobile system (100) for generating oxygen and compressed air in-situ according to claim 12, **CHARACTERIZED in that** the at least two containers (101) are on at least one common floating medium.

## Amended claims

### Amended claims under Art. 19.1 PCT

1. A mobile system (100) for generating oxygen and compressed air in-situ without accumulation, increasing dissolved oxygen concentrations in cages on demand, in a modular, mobile manner of at least 10 tons, without producing electrical power of its own, automated, **CHARACTERIZED in that** it comprises:
a container (101), comprising inside:
at least one oxygen generating means (102), with at least one oxygen pond (104);
at least one means for compressing air (103), with at least one air container (105);
ducts for transporting air and/or oxygen from the mobile system (100) to at least one aquaculture cage or container;
control means (106), which are connected to air sensors and oxygen sensors located in the cages or containers for aquaculture, to take the respective air and oxygen data and send this data to those who command the generation and delivery of oxygen to said cages or containers for aquaculture, according to the biological species to be cultivated; and
electrical connection means (110) which are connected to the mains and supply electricity to the oxygen generation means (102); the means for compressing air (103); the air sensors and oxygen sensors, and to the control means (106), wherein, the ratio between the total volume of the system and the generated oxygen flow is between 0.3 and 1 m³ h/kg.

2. The mobile system (100) for generating oxygen and compressed air in-situ according to claim 1, **CHARACTERIZED in that** it comprises oxygen control valves (107) and air control valves (108), which are commanded by the control means (106), for metering the delivery of oxygen of at least 90% purity.

3. The mobile system (100) for generating oxygen and compressed air in-situ according to claim 1, **CHARACTERIZED in that** the pressure in the ducts for transporting oxygen is at least 150 kPa (1.5 Bar).

4. The mobile system (100) for generating oxygen and compressed air in-situ according to claim 1, **CHARACTERIZED in that** the pressure in the ducts for conveying air is at least 250 kPa (2.5 Bar).

5. The mobile system (100) for generating oxygen and compressed air in-situ according to claim 1,2, 3 or 4, **CHARACTERIZED in that** the diffusion of air and/or oxygen is performed in a diffuser for each gas or a single diffuser for both gases which is fed by an air duct and an oxygen duct.

6. The mobile system (100) for generating oxygen and compressed air in-situ according to claim 1, 2, 3 or 4, **CHARACTERIZED in that** it further comprises a water pump (111) for inserting water into cages or containers for aquaculture enriched with air, oxygen or mixture of both gases.

7. The mobile system (100) for generating oxygen and compressed air in-situ according to claim 1, **CHARACTERIZED in that** it further comprises at least one drain (112) for removing water from an air dryer (113) connected to said at least one oxygen generation means (102).

8. The mobile system (100) for generating oxygen and compressed air in-situ according to claim 1, **CHARACTERIZED in that** it further comprises solar panels with batteries and/or voltage inverters to supplement the delivery of electrical power to sensors, control means (106), among other electrical or electronic equipment.

9. The mobile system (100) for in-situ oxygen generation according to claim 1, **CHARACTERIZED in that** the ratio between the amount of air generated and the amount of oxygen generated is between 15 to 1 and 4 to 1 in volume, in order to decrease energy consumption with respect to oxygenation of the aqueous medium.

10. The mobile system (100) for generating oxygen and compressed air in-situ according to claim 1, **CHARACTERIZED in that** it further comprises rolling means at the bottom of the container (101), to facilitate moving the mobile system (100).

11. The mobile system (100) for generating oxygen and compressed air in-situ according to claim 1, **CHARACTERIZED in that** it further comprises at least one floating means at the bottom of the container (101), to facilitate the displacement of the mobile system (100) on a liquid fluid.

12. The mobile system (100) for generating oxygen and compressed air in-situ according to claim 11, **CHARACTERIZED in that** the at least two containers (101) are on at least one common floating medium.
